# EUROPEAN PATENT SPECIFICATION

(11) **EP 2 573 968 B1**
(45) Date of publication and mention of the grant of the patent: **10.07.2019**
(21) Application number: 11791872.2
(22) Date of filing: 06.05.2011
(51) Int. Cl.: H04J 14/02, H04Q 11/00, H04L 12/70

(54) **METHOD, DEVICE AND SYSTEM FOR ESTABLISHING WAVELENGTH CONNECTION**
VERFAHREN, VORRICHTUNG UND SYSTEM ZUR HERSTELLUNG EINER WELLENLÄNGENVERBINDUNG
PROCÉDÉ, DISPOSITIF ET SYSTÈME PERMETTANT D'ÉTABLIR UNE CONNEXION DE LONGUEUR D'ONDE

(30) Priority: 09.06.2010 CN 201010201379
(43) Date of publication of application: 27.03.2013
(73) Proprietor: Huawei Technologies Co., Ltd., Longgang District Shenzhen, Guangdong 518129 (CN)
(72) Inventor: ZI, Xiaobing, Shenzhen Guangdong 518129 (CN)
(74) Representative: Maiwald Patent- und Rechtsanwaltsgesellschaft mbH
(86) International application number: PCT/CN2011/073740
(87) International publication number: WO 2011/153881

(56) References cited:
- EP-A2- 1 303 160
- CN-A- 101 227 248
- US-A1- 2008 031 623
- US-A1- 2008 031 623
- US-A1- 2009 080 886
- BERNSTEIN GROTTO NETWORKING Y LEE HUAWEI BEN MACK-CRANE HUAWEI G: "WSON Signal Characteristics and Network Element Compatibility Constraints for GMPLS; draft-bernstein-ccamp-wson-compatibility-0 1.txt", WSON SIGNAL CHARACTERISTICS AND NETWORK ELEMENT COMPATIBILITY CONSTRAINTS FOR GMPLS; DRAFT-BERNSTEIN-CCAMP-WSON-COMPATIBILITY-0 1.TXT, INTERNET ENGINEERING TASK FORCE, IETF; STANDARDWORKINGDRAFT, INTERNET SOCIETY (ISOC) 4, RUE DES FALAISES CH- 1205 GE, no. 1, 7 October 2009 (2009-10-07), XP015064426, [retrieved on 2009-10-07]
- AL-FUQAHA A ET AL: "Routing Framework for All-Optical DWDM Metro and Long-Haul Transport Networks With Sparse Wavelength Conversion Capabilities", IEEE JOURNAL ON SELECTED AREAS IN COMMUNICATIONS, IEEE SERVICE CENTER, PISCATAWAY, US, vol. 22, no. 8, 1 October 2004 (2004-10-01), pages 1443-1459, XP011119617, ISSN: 0733-8716, DOI: 10.1109/JSAC.2004.830381
- BERNSTEIN GROTTO NETWORKING Y LEE HUAWEI G: "Applicability of GMPLS and PCE to Wavelength Switched Optical Networks; draft-bernstein-ccamp-wavelength-switched- 00.txt", 20070625, 25 June 2007 (2007-06-25), XP015050767, ISSN: 0000-0004

## Description

### TECHNICAL FIELD

The present invention relates to the technical field of network communications, in particular to the wavelength division technology.

### BACKGROUND ART

In a wavelength division network, a wavelength connection may span one or multiple optical fiber links. When the wavelength connection spans multiple optical fiber links, wavelength signals on different optical fiber links are connected by wavelength division nodes, i.e., a wavelength cross connection is performed via the wavelength division nodes.

A wavelength division node may comprise multiple wavelength regeneration functional modules that are mainly for wavelength conversion so as to exchange wavelength signals from one optical fiber link to another optical fiber link. The wavelength regeneration modules can also be used for amplifying the wavelength signals to improve the signal quality. A wavelength division node usually comprises wavelength regeneration functional modules with different wavelength regeneration capabilities. The regeneration capability of a wavelength regeneration functional module may include the signal type, input Forward Error Correction (FEC) type, output FEC type, input wavelength and output wavelength supported by the wavelength regeneration functional module, and the like contents.

A method for setting up wavelength connection in a wavelength division network may comprise: after a route calculating node calculates a route, the nodes involved in the route will be elemented to a signaling process to designate wavelength division nodes for realizing the wavelength regeneration function. The wavelength division nodes for realizing the wavelength regeneration function will independently select wavelength regeneration modules based on the received signaling such as a wavelength connection setting up request message.

In the process of carrying out the present invention, the inventor discovers that in the case where a plurality of wavelength connections are set up by a wavelength division node that needs a wavelength regeneration process, the existing methods for setting up wavelength connection will possibly cause phenomena that the wavelength connection set up later in the wavelength connection setting up order will fail. For example, a wavelength division node comprises two wavelength regeneration modules therein, i.e., wavelength regeneration module 1 and wavelength regeneration module 2. It is assumed that both wavelength regeneration module 1 and wavelength regeneration module 2 support the first wavelength connection, but only wavelength regeneration module 1 supports the second wavelength connection. Under such circumstance, if the wavelength division node selects wavelength regeneration module 1 for the first wavelength connection setting up request message that is received first, the wavelength division node cannot assign a wavelength regeneration module to the second wavelength connection set up request message that is received later, thereby the set up of the second wavelength connection may fail.

### BERNTEIN GROTTO NETWORKING Y LEE HUAWEI BEN MACK-CRANE HUAWEI

G:"WSON Signal Characteristics and Network Element Compatibility Constraints for GMPLS; draft-bernstein-ccamp-wson-compatibility-01.txt" discloses WSON signal characteristics and network element compatibility constraints when a control plane is extended to networks which include a combination of transparent optical and hybrid electro optical systems such as OEO switches, regenerators, and wavelength converters.

AL-FUQAHA A ET AL: "Routing Framework for All-Optical DWDM Metro and Long-Haul Transport Networks with Sparse Wavelength Conversion Capabilities" discloses a routing framework for all-optical dense wavelength-division-multiplexing transport networks with sparse wavelength conversion capabilities. The routing framework includes an integer linear programming formulation to handle the static lightpath establishment problem and a novel open shortest path first protocol extension that advertises the availability of wavelength usage and wavelength conversion resources.

### SUMMARY OF THE INVENTION

By the method, device, and system for setting up wavelength connection according to the embodiments of the present invention, the phenomenon that the set up of the wavelength connection fails can be avoided, and the reliability of the set up of the wavelength connection is improved.

The method for setting up wavelength connection according to one embodiment of the present invention, comprises:
acquiring wavelength regeneration module regeneration capability information of a wavelength division node that is a node where a wavelength cross connection is performed;
calculating at least one wavelength path according to the wavelength regeneration module regeneration capability information, and selecting a wavelength regeneration module for the wavelength division node that needs a wavelength regeneration process in the wavelength path, such that requirements of multiple wavelength connections that are set up via the same wavelength division node that needs a wavelength regeneration process are comprehensively taken into account; and
distributing a message containing the wavelength regeneration module selection information to the wavelength division node in the wavelength path so that the wavelength division node sets up the wavelength connection according to the wavelength regeneration module indicated in the wavelength regeneration module selection information.

The device for setting up wavelength connection according to one embodiment of the present invention, comprises:
an acquiring module for acquiring wavelength regeneration module regeneration capability information of a wavelength division node;
a path calculating module for calculating at least one wavelength path according to the wavelength regeneration module regeneration capability information, and selecting a wavelength regeneration module for the wavelength division node that needs a wavelength regeneration process in the wavelength path, such that requirements of multiple wavelength connections that are set up via the same wavelength division node that needs a wavelength regeneration process are comprehensively taken into account; and
a distributing module for distributing a message containing the wavelength regeneration module selection information to the wavelength division node in the wavelength path so that the wavelength division node sets up the wavelength connection according to the wavelength regeneration module indicated in the wavelength regeneration module selection information.

The system for setting up wavelength connection according to one embodiment of the present invention, characterized in comprising:
a first node for acquiring a wavelength regeneration module regeneration capability information of a wavelength division node, calculating at least one wavelength path according to the wavelength regeneration module regeneration capability information, selecting a wavelength regeneration module for the wavelength division node in the wavelength path, , such that requirements of multiple wavelength connections that are set up via the same wavelength division node that needs a wavelength regeneration process are comprehensively taken into account, and distributing a message containing the wavelength regeneration module selection information to the wavelength division node in the wavelength path; and
a second node for receiving the message containing the wavelength regeneration module selection information, and setting up the wavelength connection for the wavelength path according to the wavelength regeneration module indicated in the wavelength regeneration module selection information contained in the message, when the second node is the wavelength division node that needs a wavelength regeneration process in the wavelength path.

As can be seen from the descriptions of the above technical solution, by selecting a wavelength regeneration module for a wavelength division node that needs a wavelength regeneration process in a wavelength path in the wavelength path calculating process, and distributing a message containing wavelength regeneration module selection information to the wavelength division node in the wavelength path, requirements of the multiple wavelength connections to be set up via the wavelength division node for wavelength regeneration modules are comprehensively taken into account, availability of the wavelength regeneration modules in the wavelength division node is optimized, the phenomenon that the wavelength division node's failure in selecting a wavelength regeneration module for a subsequent wavelength connection due to selection of a wavelength regeneration module for a preceding wavelength connection is avoided, thereby ultimately avoiding the phenomenon that the set up of wavelength connection fails and improving the reliability of the set up of the wavelength connection.

### BRIEF DESCRIPTION OF THE DRAWINGS

In order to explain the technical solutions in the embodiments of the present application more clearly, the drawings to be referred to in depictions of the embodiments are briefly introduced below. Obviously, the drawings depicted below are only some embodiments disclosed in the present invention. An ordinary skilled person in the art can obtain other drawings based on these drawings without inventive efforts.
FIG. 1 is a flowchart of the method for setting up wavelength connection according to Embodiment 1 of the present invention;
FIG. 2 is a flowchart of the method for setting up wavelength connection according to Embodiment 2 of the present invention;
FIG. 3A is a schematic diagram of the method for setting up wavelength connection according to Embodiment 3 of the present invention;
FIG. 3B is a schematic diagram of the wavelength regeneration module selection information according to Embodiment 3 of the present invention;
FIG. 3C is a schematic diagram of another method for setting up wavelength connection according to Embodiment 3 of the present invention;
FIG. 4 is a schematic diagram of the device for setting up wavelength connection according to Embodiment 4 of the present invention;
FIG. 5 is a schematic diagram of the device for setting up wavelength connection according to Embodiment 5 of the present invention;
FIG. 6 is a schematic diagram of the device for setting up wavelength connection according to Embodiment 6 of the present invention.

### DETAILED DESCRIPTION OF THE PREFERRED EMBODIMENTS

The specific process of carrying out the present invention is exemplarily described below with the embodiments. Obviously, the embodiments depicted below are only part of rather than all of the embodiments. Based on the embodiments in the present application, all the other embodiments that can be obtained by an ordinary skilled in the art without inventive efforts shall fall into the scope claimed in the present application.

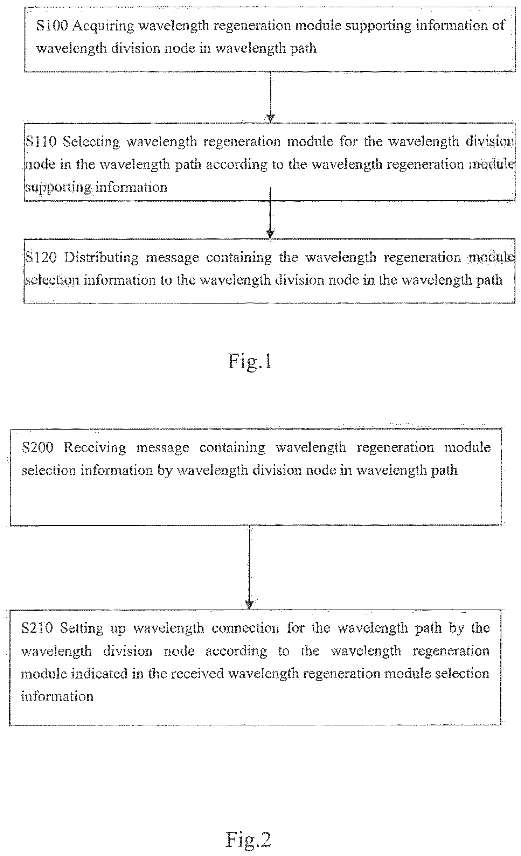

Embodiment 1: a method for setting up wavelength connection. The flow of the method is shown in FIG. 1.

Step S100: Wavelength regeneration module supporting information (i.e., wavelength regeneration module regeneration capability information) of a wavelength division node is acquired. The wavelength division node herein may include a wavelength division node that needs a wavelength regeneration process.

The element that performs S100 may be a start node of the wavelength path (i.e., a start node of the wavelength path in a decentralized wavelength path calculating mode) or alternatively a centralized wavelength path calculating node. The element that performs S100 may acquire wavelength regeneration module supporting information of the wavelength division node from information stored therein. That is, the element that performs S100 stores therein wavelength regeneration module supporting information of the wavelength division node, the stored information may be issued by the wavelength division node to each node in the network, e.g., wavelength regeneration module supporting information of its own that is sent by the wavelength division node via a routing protocol to each node in the network. Each node that receives the issued information stores the wavelength regeneration module supporting information of the wavelength division node.

One specific example of the wavelength regeneration module supporting information is that wavelength regeneration module supporting information includes the signal type, input FEC type, output FEC type, input wavelength, output wavelength supported by the wavelength regeneration functional module, and the like. The specific contents included in the wavelength regeneration module supporting information are not restricted in the present embodiment.

Step S110: At least one wavelength path is calculated according to the acquired wavelength regeneration module supporting information, and a wavelength regeneration module is selected for the wavelength division node that needs a wavelength regeneration process in the wavelength path. Selecting a wavelength regeneration module for the wavelength division node that needs a wavelength regeneration process in the wavelength path can also be referred to as assigning a wavelength regeneration module to the wavelength path with respect to the wavelength division node that needs a wavelength regeneration process in the wavelength path.

The start node or centralized wavelength path calculating node of the wavelength path can calculate the wavelength path according to the wavelength regeneration module information of the wavelength division node by use of multiple existing methods. The specific wavelength path calculating mode is not restricted in the present embodiment. In the present embodiment, it is necessary to select a wavelength regeneration module for the wavelength division node that needs a wavelength regeneration process in the calculated wavelength path. In the present embodiment, the process of selecting a wavelength regeneration module for the wavelength division node can also be categorized into the process of calculating the wavelength path so that the specific process of calculating the wavelength path differs from the existing specific process of calculating a wavelength path in that the factor of selecting a wavelength regeneration module needs to be taken into account in the wavelength path calculating algorithm.

When a wavelength regeneration module is selected, it should be taken into account that multiple wavelength paths need to be set up simultaneously. That is, in addition to the wavelength path of interest, other wavelength paths should further be taken into account so as to make the number of the wavelength paths set up via the wavelength division node as large as possible. That is, in applied environment where the demand for the setting up multiple wavelength connections is simultaneously satisfied, wavelength regeneration modules in the wavelength division node should be assigned reasonably so that the wavelength regeneration modules contained in the wavelength division node can be assigned to as many wavelength paths as possible.

As can be seen from the above descriptions, in S110, a predetermined assigning principle should be complied with in selecting a wavelength regeneration module for the wavelength division node in the wavelength path. The predetermined assigning principle may include making the number of the wavelength paths set up via the wavelength division node largest or as large as possible. The predetermined assigning principle may be also referred to as the principle of optimizing use of wavelength regeneration modules in a wavelength division node. In other words, in the present embodiment the existing wavelength path calculating algorithm is improved so that it includes the algorithm of optimizing use of wavelength regeneration modules in a wavelength division node.

One specific example of selecting a wavelength regeneration module for a wavelength division node in a wavelength path is described as below. Each wavelength regeneration functional module in a wavelength division node is different from the each other in terms of wavelength regeneration capability. That is, some wavelength regeneration functional modules are strong in terms of wavelength regeneration capability (e.g., support multiple input FEC types etc.), whereas some are weak (e.g., support one input FEC type etc.). In the case where one wavelength path is calculated, a wavelength regeneration functional module that is capable of satisfying the wavelength regeneration capability requirement of the wavelength path and has weakest wavelength regeneration capability can be selected for the wavelength division node in the wavelength path.

Another specific example of selecting a wavelength regeneration module for a wavelength division node in a wavelength path is described as below. When at least two wavelength paths pass through the wavelength node 1 that needs a wavelength regeneration process, various combinations that are assigned to each wavelength path by wavelength regeneration modules in wavelength division node 1 are listed, and one combination that can satisfy a wavelength regeneration capability requirement of the each wavelength path is selected from the listed combinations. The selected combination is the selected wavelength regeneration module.

The wavelength regeneration module selected in S100 may include wavelength regeneration modules in a direction from a start node to an end node of the wavelength path, and any one or two of wavelength regeneration modules in a direction from an end node to a start node of the wavelength path. Usually, the selected wavelength regeneration modules include wavelength regeneration modules in two directions of the wavelength paths.

Step S120: A message containing wavelength regeneration module selection information is transmitted to the wavelength division node that needs a wavelength regeneration process in the calculated wavelength path so that the wavelength division node sets up the wavelength connection for the wavelength path according to the wavelength regeneration module indicated in the received wavelength regeneration module selection information.

In the present embodiment, the wavelength regeneration module selection information may be transmitted to the wavelength division node via a wavelength connection setting up request message, or alternatively via other messages. The wavelength regeneration module selection information may be carried in an existing object or sub-object of the wavelength connection setting up request message, or in a newly added object or sub-object of the wavelength connection setting up request message. The wavelength regeneration module selection information may be a serial number of the wavelength regeneration module or in another form. For example, four bits corresponds to four wavelength regeneration modules, one bit corresponds to one wavelength regeneration module, a wavelength regeneration module corresponding to a bit with the value 0 is not selected, and a wavelength regeneration module corresponding to a bit with the value 1 is selected. The specific process of transmitting the wavelength regeneration module selection information to the wavelength division node is not restricted in the present embodiment.

As can be seen from the descriptions of the above Embodiment 1, by selecting a wavelength regeneration module for the wavelength division node in the path calculating process in the embodiment, the requirements of multiple wavelength connections that are set up via the same wavelength division node that needs a wavelength regeneration process are comprehensively taken into account, the use of wavelength regeneration modules in the wavelength division node is optimized, and the phenomenon that the wavelength division node fails to select a wavelength regeneration module for a subsequent wavelength connection due to selecting a wavelength regeneration module for a preceding wavelength connection is avoided. Thus, the present embodiment avoids the phenomenon that the set up of the wavelength connection fails and improves the reliability of the set up of the wavelength connection.

Embodiment 2: a method for setting up wavelength connection. The flow of the method is shown in FIG. 2.

Step S200 in FIG. 2: A wavelength division node that needs a wavelength regeneration process in a wavelength path receives a message containing wavelength regeneration module selection information.

The message received by the wavelength division node may be a wavelength connection setting up request message, and the wavelength regeneration module selection information in the message may be the serial number or other information and the like of the selected wavelength regeneration module.

The wavelength regeneration module selection information carried in the message is determined by another node according to the optimized use algorithm of the wavelength regeneration module in the wavelength division node. The another node herein is a start node or a centralized wavelength path calculating node of the wavelength path and the like.

The message containing the wavelength regeneration module selection information is transmitted by an upstream node of the wavelength division node in the wavelength path, and can be transmitted from the start node till the end node in the wavelength path.

Step S210: The wavelength division node sets up the wavelength connection according to the wavelength regeneration module indicated in the wavelength regeneration module selection information contained in the message.

Specifically, the wavelength division node may determine the wavelength regeneration module for setting up the wavelength connection according to the wavelength regeneration module selection information contained in the received message, and then sets up the wavelength connection with the determined wavelength regeneration module. In the present embodiment, the specific process of setting up the wavelength connection by the wavelength division node is not restricted.

As can be seen from the descriptions of the above Embodiment 2, the wavelength division node in the present embodiment does not need to determine independently the wavelength regeneration module for setting up the wavelength connection, and the process of determining the wavelength regeneration module is carried out by the start node or centralized wavelength path calculating node of the wavelength path. Thus, the start node or centralized wavelength path calculating node can take into account comprehensively the requirements of multiple wavelength connections set up via the same wavelength division node that needs a wavelength regeneration process, and optimizes the use of wavelength regeneration modules in the wavelength division node. Consequently, the wavelength division node in the present embodiment can succeed in setting up the wavelength connection with respect to the wavelength connection setting up request message that is received later, avoids the phenomenon that the set up of wavelength connection fails, and improves the reliability of the set up of the wavelength connection.

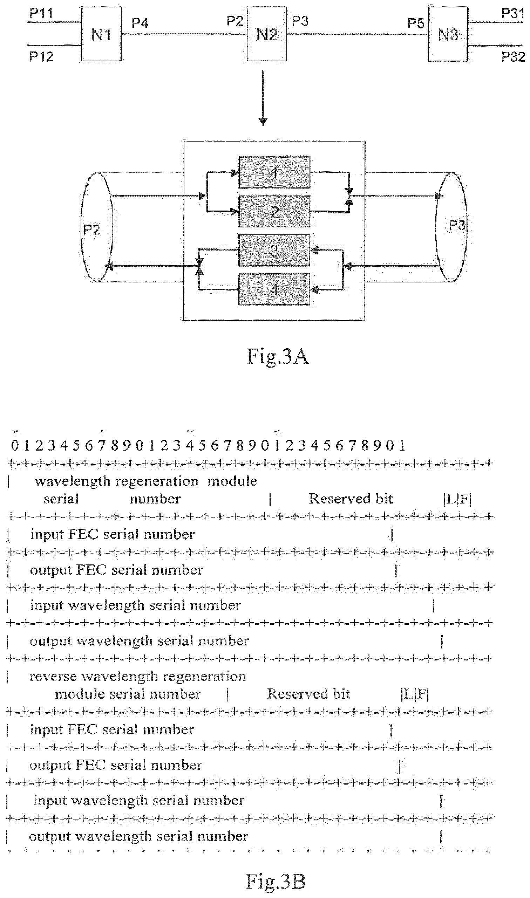

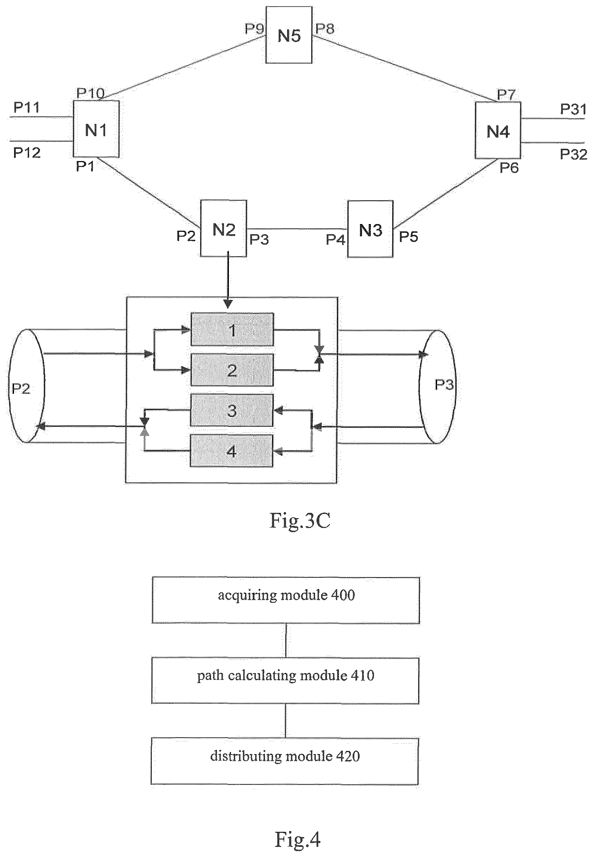

Embodiment 3: a method for wavelength connection. The present embodiment is described examplarily with reference to FIGs. 3A, 3B and 3C.

FIG. 3A comprises three nodes, i.e., N1, N2, and N3. Between the wavelength interfaces of N1 and N2, one wavelength connection may be set up via N2. The optical fiber link between N1 and N2 may be referred to as optical fiber link 1, and the optical fiber link between N2 and N3 may be referred to as optical fiber link 2. N2 is the wavelength division node that needs a wavelength regeneration process, and N2 can exchange the wavelength signal from optical fiber link 1 into optical fiber link 2, so that the wavelength interfaces between N1 and N3 are communicated.

The wavelength division node N2 in FIG. 3A comprises four wavelength regeneration modules, the serial numbers of which are 1, 2, 3, and 4 respectively as the blocks marked with 1, 2, 3, and 4 in the center of the lower part of FIG. 3A. Modules 1 and 2 are used for wavelength conversion of the wavelength signals in the direction from N1 to N3, and modules 3 and 4 are used for wavelength conversion of the wavelength signals in the direction from N3 to N1. That is, 1 and 2 can perform a regeneration process on the wavelength signal at the port P2 and be cross connected to the port P3, whereas 3 and 4 can perform a regeneration process on the wavelength signal at the port P3 and be cross connected to the port P2.

It is assumed that the signal type, input FEC type, and the output FEC type supported by the four wavelength regeneration modules are shown in Table 1.

**Table 1**

| wavelength regeneration module | signal type | Input FEC type | output FEC type |
|---|---|---|---|
| 1 | OTU2 | FEC1, FEC2 | FEC5 |
| 2 | OTU2 | FEC2, FEC3 | FEC5 |
| 3 | OTU2 | FEC5 | FEC1, FEC2 |
| 4 | OTU2 | FEC5 | FEC2, FEC3 |

It should be noted that Table 1 only discloses one example of wavelength regeneration module selection information, which may alternatively include other contents besides the contents shown in Table 1.

N2 can distribute information shown in Table 1 via a routing protocol to the entire network so that both N1 and N3 will receive and store the contents shown in the above Table 1. Information shown in Table 1 can be used in the wavelength path calculating process. That is, the signal type, input FEC type, and output FEC type supported by the wavelength regeneration module are constraint conditions in the wavelength path calculation.

In the embodiment according to FIG. 3A, it is assumed that two wavelength connections need to be set up, namely:
a first wavelength connection, a bidirectional wavelength connection from port P11 to port P31, wherein the signal type is Optical channel Transport Unit 2 (OTU2), the FEC type supported by port P11 is FEC2, and the FEC type supported by port P31 is FEC5; and
a second wavelength connection, a bidirectional wavelength connection from port P12 to port P32, wherein the signal type is OUT2, the FEC type supported by port P12 is FEC1, and the FEC type supported by port P32 is FEC5.

The results of wavelength path calculation made by start node N1 or centralized wavelength path calculating node of the wavelength connection according to the above Table 1 can be as follows: Wavelength path1: N1(P11, FEC2)--N2 (wavelength regeneration module 2, wavelength regeneration module 4)--N3(P31, FEC5), using the wavelength of the serial number 1; Wavelength path2: N1(P12, FEC1)--N2 (wavelength regeneration module 1, wavelength regeneration module 3)--N3(P32, FEC5), using the wavelength of the serial number 2.

If the wavelength path calculation is calculated by the centralized wavelength path calculating node, the centralized wavelength path calculating node should inform the start node of the wavelength connection on the calculated wavelength path information.

As can be seen from the calculated wavelength path, with respect to wavelength path 1, the wavelength regeneration modules selected from N2 are wavelength regeneration module 2 and wavelength regeneration module 4. With respect to wavelength path 2, the wavelength regeneration modules selected from N2 are wavelength regeneration module 1 and wavelength regeneration module 3.

One specific example of the aforesaid wavelength path calculating process may be literally described as follows. Since the FEC type supported by the port P11 is different from the FEC type supported by the port P31, it is necessary to execute the wavelength regeneration function at a certain wavelength division node and to select a wavelength division node with a wavelength regeneration function, e.g., N2. Then a wavelength path 1 that has to pass through N2, such as N1-N2-N3, is calculated with the existing Constrained Shortest Path First (CSPF) algorithm. Likewise, since the FEC type supported by the port P12 is different from the FEC type supported by the port P32, so it is necessary to execute the wavelength regeneration function at a certain wavelength division node and to select a wavelength division node with a wavelength regeneration function, e.g., N2. Then a wavelength path 2 that has to pass through N2, such as N1-N2-N3, is calculated with the existing CSPF algorithm. Then combinations of assigned wavelength regeneration modules are determined with respect to the wavelength path 1 and the wavelength path 2. The combinations may be as the following two:
Combination a: (the wavelength regeneration module 2, the wavelength regeneration module 4) and (the wavelength regeneration module 1, the wavelength regeneration module 3). That is, (the wavelength regeneration module 2, the wavelength regeneration module 4) correspond to the wavelength path 1, and (the wavelength regeneration module 1, the wavelength regeneration module 3) correspond to the wavelength path 2.
Combination b: (the wavelength regeneration module 2, the wavelength regeneration module 3) and (the wavelength regeneration module 1, the wavelength regeneration module 4). That is, (the wavelength regeneration module 2, the wavelength regeneration module 3) correspond to the wavelength path 1, and (the wavelength regeneration module 1, the wavelength regeneration module 4) correspond to the wavelength path 2.

Since Combination a can satisfy the wavelength regeneration capability requirements of the wavelength path 1 and wavelength path 2, and Combination b cannot satisfy the wavelength regeneration capability requirement of the wavelength path 2, Combination a is selected.

After the aforesaid wavelength path calculation, the two wavelength connections are set up in turn. The process of setting up the two wavelength connections are described below.

The process of setting up the first wavelength connection is as follows.

Firstly, N1 acquires the first wavelength path information, i.e., N1 (P11, FEC2)--N2 (wavelength regeneration module 2, wavelength regeneration module 4)--N3(P31, FEC5). Then, N1 sets up the wavelength cross connection from P11 to P4 (P4 is the port on N1 that is connected to N2), and transmits the wavelength connection setting up request message to the downstream node N2, wherein the wavelength connection setting up request message includes the serial number information of the wavelength regeneration module 2 and wavelength regeneration module 4. After receiving the wavelength connection setting up request message, N2 determines to use the wavelength regeneration module 2 and wavelength regeneration module 4 to realize the wavelength regeneration according to the serial number information of the wavelength regeneration module contained in the message, and N2 transmits the wavelength connection setting up request message to the downstream node N3. After receiving the wavelength connection setting up request message, N3 sets up the wavelength cross connection of P5 (P5 is the port on N3 that is connected to N2) and P31, and returns a wavelength connection setting up response message to the upstream node N2. N2 forwards the received wavelength connection setting up response message to N1. When N1 receives the wavelength connection setting up response message, the first wavelength connection is successfully set up.

The process of setting up the second wavelength connection is as follows.

Firstly, N1 acquires the second wavelength path information, i.e., N1 (P12, FEC2)--N2 (wavelength regeneration module 1, wavelength regeneration module 3)--N3(P32, FEC5). Then, N1 sets up the wavelength cross connection from P12 to P4, and transmits the wavelength connection setting up request message to the downstream node N2, wherein the wavelength connection setting up request message includes the serial number information of the wavelength regeneration module 1 and wavelength regeneration module 3. After receiving the wavelength connection setting up request message, N2 determines to use the wavelength regeneration module 1 and wavelength regeneration module 3 to realize the wavelength regeneration according to the serial number information of the wavelength regeneration module contained in the message, and transmits the wavelength connection setting up request message to the downstream node N3. After receiving the wavelength connection setting up request message, N3 sets up the wavelength cross connection of P5 and P32, and returns a wavelength connection setting up response message to the upstream node N2. N2 forwards the received wavelength connection setting up response message to N1. When N1 receives the wavelength connection setting up response message, the second wavelength connection is successfully set up.

In the process of setting up wavelength connections described above, the wavelength connection setting up request message transmitted from N1 to N3 and the wavelength connection setting up response message transmitted form N3 to N1 may be a Resource Reservation Protocol (RSVP) message. For example, the wavelength connection setting up request message is the Path message in the RSVP, and the wavelength connection setting up response message is the Resv message.

The above Path message may include an Explicit Route Object (ERO) for designating an explicit router. In the embodiment according to FIG. 3A, a new sub-object may be defined in the ERO, and can be referred to as a wavelength regeneration module sub-object. The wavelength regeneration module serial number sub-object is used for designating a wavelength regeneration module of a corresponding wavelength division node. One specific example of a wavelength regeneration module sub-object is shown in FIG. 3B.

In FIG. 3B, "wavelength regeneration module serial number" denotes the serial number of the wavelength regeneration module used in a direction from a start node to an end node, and "reverse wavelength regeneration module serial number" denotes the serial number of the wavelength regeneration module used in a direction from an end node to a start node. F flag bit of 1 means that the input FEC type and output FEC type have been designated, and F flag bit of 0 means that the input FEC type and the output FEC type have not been designated. L flag bit of 1 means that the input wavelength serial number and output wavelength serial number have been designated, and L flag bit of 0 means that the input wavelength serial number and output wavelength serial number have not been designated. For example, if the input FEC type and output FEC type have been designated while the wavelength serial number has not been designated, L flag bit is 0 and F flag bit is 1 so that the sub-object may not include the fields "input wavelength serial number" and "output wavelength serial number".

FIG. 3C comprises five nodes, i.e., N1, N2, N3, N4, and N5. Between the wavelength interfaces of N1 and N4, one wavelength connection may be set up via N2 and N3. The optical fiber link between N1 and N2 may be referred to as optical fiber link 1, and the optical fiber link between N2 and N3 may be referred to as optical fiber link 2. N2 is the wavelength division node that needs a wavelength regeneration process, and N2 can exchange the wavelength signals from optical fiber link 1 into optical fiber link 2 so that the wavelength interfaces of N1 and N3 are communicated.

The wavelength division node N2 in FIG. 3C comprises four wavelength regeneration modules, the serial numbers of which are 1, 2, 3, and 4 respectively as the blocks marked with 1, 2, 3, and 4 in the center of the lower part of FIG. 3C. Modules 1 and 2 therein are used for wavelength conversion of the wavelength signals in the direction from N1 to N3, and modules 3 and 4 are used for wavelength conversion of the wavelength signals in the direction from N3 to N1. That is, 1 and 2 can perform a regeneration process on the wavelength signal at the port P2 and be cross connected to the part P3, whereas 3 and 4 can perform a regeneration process on the wavelength signal of the port P3 and be cross connected to the port P2.

It is assumed that the signal type, input FEC type, and output FEC type supported by the four wavelength regeneration modules are shown in Table 2.

**Table 2**

| wavelength regeneration module | signal type | input wavelength type | output wavelength type |
|---|---|---|---|
| 1 | OTU2 | wavelength 1, wavelength 2 | wavelength5, wavelength6 |
| 2 | OTU2 | wavelength2, wavelength3 | wavelength5, wavelength6 |
| 3 | OTU2 | wavelength5, wavelength6 | wavelength1, wavelength2 |
| 4 | OTU2 | wavelength5, wavelength6 | wavelength2, wavelength3 |

It should be noted that Table 2 only discloses one example of wavelength regeneration module selection information, which may alternatively include other contents besides the contents shown in Table 2.

N2 can distribute information shown in Table 2 via a routing protocol to the entire network so that N1, N3, N4, N5 and Path Computation Element (PCE) will all receive and store the contents shown in the above Table 2. Information shown in Table 1 can be used in the wavelength path calculation process of the PCE. That is, the signal type, input wavelength type, and output wavelength type supported by the wavelength regeneration module are constraint conditions in the wavelength path calculation by PCE. PCE is a centralized wavelength path calculating element responsible for calculating the wavelength path in the network. PCE may be provided in any one node in the network. A node in the network that needs to request for PCE to calculate the wavelength path may be referred to as a Path Computation Client (PCC). A PCC in the network can transmit to a PCE a wavelength path calculation request message containing the wavelength path constraint conditions for requesting for the PCE to calculate the wavelength path. The PCE may return the calculated wavelength path to the PCC via a wavelength path calculation response message. The wavelength path calculation request message and the wavelength path calculation response message may adopt the PCE Protocol (PCEP).

In the embodiment according to FIG. 3C, it is assume that two wavelength connections need to be set up, namely:
a first wavelength connection, a bidirectional wavelength connection from port P11 to port P31, wherein the signal type is OTU2, the wavelength type supported by the port P11 is wavelength 2, and the wavelength type supported by the port P31 is wavelength 5;
a second wavelength connection, a bidirectional wavelength connection from port P12 to port P32, wherein the signal type is OUT2, the wavelength type supported by the port P12 is wavelength 1, and the wavelength type supported by the port P32 is wavelength 6.

N1 sends a wavelength path calculation request message to PCE for requesting PCE to calculate the aforesaid two wavelength connections, wherein the wavelength path calculation request message contains the constraint conditions of the aforesaid two wavelength connections that may be described as follows. The signal type of the first wavelength connection is OUT2, the source port is P11, the destination port is P31, the wavelength type supported by the port P11 is wavelength 2, and the wavelength type supported by the port P31 is wavelength 5; the signal type of the second wavelength connection is OUT2, the source port is P12, the destination port is P32, the wavelength type supported by the port P12 is wavelength 1, and the wavelength type supported by the port P32 is wavelength 6.

The results of wavelength path calculation made by PCE after receiving the wavelength path calculation request message sent by N1 according to the above Table 2 can be as follows:
Wavelength path1: N1(P11)--N2 (wavelength regeneration module 2, wavelength regeneration module 4)--N3(P5)--N4 (P31), wherein the input wavelength type of wavelength regeneration module 2 is wavelength 2 and the output wavelength type is wavelength 5, whereas the input wavelength type of wavelength regeneration module 4 is wavelength 5 and the output wavelength type is wavelength 2;
Wavelength path2: N1(P12)--N2 (wavelength regeneration module 1, wavelength regeneration module 3)--N3(P5)--P4 (P32), wherein the input wavelength type of wavelength regeneration module 1 is wavelength 1 and the output wavelength type is wavelength 6, whereas the input wavelength type of wavelength regeneration module 3 is wavelength 6 and the output wavelength type is wavelength 1.

PCE informs N1 of the calculated wavelength path information via the wavelength path calculation response message.

As can be seen from the calculated wavelength path, with respect to wavelength path 1, the wavelength regeneration modules selected from N2 are wavelength regeneration module 2 and wavelength regeneration module 4. With respect to wavelength path 2, the wavelength regeneration modules selected from N2 are wavelength regeneration module 1 and wavelength regeneration module 3

One specific example of the wavelength path calculating process may be literally described as below.

Since the wavelength type supported by the port P11 is different from that supported by the port P31, it is necessary to execute the wavelength regeneration function at a certain wavelength division node and to select a wavelength division node with a wavelength regeneration function, e.g., N2. Then a wavelength path 1 that has to pass through N2, such as N1-N2-N3-N4, is calculated with the existing CSPF algorithm. Likewise, since the wavelength type supported by the port P12 is different from that supported by the port P32, it is necessary to execute the wavelength regeneration function at a certain wavelength division node and to select a wavelength division node with a wavelength regeneration function, e.g., N2. Then a wavelength path 2 that has to pass through N2, such as N1-N2-N3-N4, is calculated with the existing CSPF algorithm. Then combinations of assigned wavelength regeneration modules are determined with respect to the wavelength path 1 and the wavelength path 2. The combinations may be as the following two:
Combination a: (the wavelength regeneration module 2, the wavelength regeneration module 4) and (the wavelength regeneration module 1, the wavelength regeneration module 3). That is, (the wavelength regeneration module 2, the wavelength regeneration module 4) correspond to the wavelength path 1, and (the wavelength regeneration module 1, the wavelength regeneration module 3) correspond to the wavelength path 2.
Combination b: (the wavelength regeneration module 2, the wavelength regeneration module 3) and (the wavelength regeneration module 1, the wavelength regeneration module 4). That is, (the wavelength regeneration module 2, the wavelength regeneration module 3) correspond to the wavelength path 1, and (the wavelength regeneration module 1, the wavelength regeneration module 4) correspond to the wavelength path 2.

Since Combination a can satisfy the wavelength regeneration capability requirement of the wavelength path 1 and wavelength path 2, and Combination b cannot satisfy the wavelength regeneration capability requirement of the wavelength path 2. Therefore, Combination a is selected.

After the aforesaid wavelength path calculation, the two wavelength connections are set up one by one. The process of setting up the two wavelength connections are described below.

The process of setting up the first wavelength connection is as follows.

Firstly, N1 acquires the first wavelength path information from the received wavelength path calculation response message, i.e., N1 (P11)--N2 (wavelength regeneration module 2, wavelength regeneration module 4)--N3 (P5)--N4 (P31). Then, N1 sets up the wavelength cross connection from P11 to P1 (P1 is the port on N1 that is connected to N2), and transmits the wavelength connection setting up request message to the downstream node N2, wherein the wavelength connection setting up request message includes the destination port P31, the serial number information of the wavelength regeneration module 2 and wavelength regeneration module 4, the wavelength type information of the wavelength regeneration module 2 and wavelength regeneration module 4, and the like. After receiving the wavelength connection setting up request message, N2 determines to use the wavelength regeneration module 2 and wavelength regeneration module 4 to realize the wavelength regeneration according to the serial number information of the wavelength regeneration module contained in the message, determines the wavelength types used by wavelength regeneration module 2 and wavelength regeneration module 4 according to the wavelength type information contained in the message, and N2 transmits the wavelength connection setting up request message to the downstream node N3. After receiving the wavelength connection setting up request message, N3 sets up the wavelength cross connection of P4 to P5 (P5 is the port on N3 that is connected to N2), and N3 transmits the wavelength connection setting up request message to the downstream node N4. After receiving the wavelength connection setting up request message, N4 sets up the wavelength cross connection from P6 to P31, and returns a wavelength connection setting up response message to the upstream node N3. N3 forwards the received wavelength connection setting up response message to N2. N2 forwards the received wavelength connection setting up response message to N1. When N1 receives the wavelength connection setting up response message, the first wavelength connection is successfully set up.

The process of setting up the second wavelength connection is as follows.

Firstly, N1 acquires the second wavelength path information from the received wavelength path calculation response message, i.e., N1 (P12)--N2 (wavelength regeneration module 1, wavelength regeneration module 3)--N3 (P5)--N4 (P32). Then, N1 sets up the wavelength cross connection from P12 to P1 (P1 is the port on N1 that is connected to N2), and transmits the wavelength connection setting up request message to the downstream node N2, wherein the wavelength connection setting up request message includes the destination port P32, the serial number information of the wavelength regeneration module 1 and wavelength regeneration module 3, the wavelength type information of the wavelength regeneration module 1 and wavelength regeneration module 3, and the like.. After receiving the wavelength connection setting up request message, N2 determines to use the wavelength regeneration module 1 and wavelength regeneration module 3 to realize the wavelength regeneration according to the serial number information of the wavelength regeneration module contained in the message, determines the wavelength types used by wavelength regeneration module 1 and wavelength regeneration module 3 according to the wavelength type information contained in the message, and N2 transmits the wavelength connection setting up request message to the downstream node N3. After receiving the wavelength connection setting up request message, N3 sets up the wavelength cross connection of P4 to P5 (P5 is the port on N3 that is connected to N2), and transmits the wavelength connection setting up request message to the downstream node N4. After receiving the wavelength connection setting up request message, N4 sets up the wavelength cross connection from P6 to P32, and returns a wavelength connection setting up response message to the upstream node N3. N3 forwards the received wavelength connection setting up response message to N2. N2 forwards the received wavelength connection response message to N1. When N1 receives the wavelength connection setting up response message, the second wavelength connection is successfully set up.

In the process of setting up wavelength connections described above, the wavelength connection setting up request message transmitted from N1 to N4 and the wavelength connection response message transmitted from N4 to N1 may be a RSVP message. For example, the wavelength connection setting up request message is the Path message in the RSVP, and the wavelength connection setting up response message is the Resv message. The above Path message may include an ERO. In the embodiment according to FIG. 3A, a new sub-object may be defined in the ERO, and can be referred to as a wavelength regeneration module sub-object. The wavelength regeneration module serial number sub-object is used for designating a wavelength regeneration module of a corresponding wavelength division node. One specific example of a wavelength regeneration module sub-object is as shown in FIG. 3B, and not described in detail herein.

Embodiment 4: a device for setting up wavelength connection. The device may be provided in a node in an optical network, e.g., in a wavelength division node in an optical network or in a centralized wavelength path calculating node in an optical network. The structure of the device is as shown in FIG. 4.

The device according to FIG. 4 comprises: an acquiring module 400, a path calculating module 410, and a distributing module 420.

The acquiring module 400 is for acquiring wavelength regeneration module supporting information of a wavelength division node. The wavelength division node herein includes a wavelength division node that needs a wavelength regeneration process.

The acquiring module 400 can acquire wavelength regeneration module supporting information of the wavelength division node from information stored in the device for setting up wavelength connection itself. Information stored in the device for setting up wavelength connection itself may be issued by the wavelength division node to each node in the network. For example, the wavelength division node issues wavelength regeneration module supporting information of its own via a routing protocol to each node in the network, and each node that receives the issued information stores the wavelength regeneration module supporting information of the wavelength division node.

One specific example of the acquiring module 400 acquiring the wavelength regeneration module supporting information is described below. The acquiring module 400 acquires information such as the signal type, input FEC type, output FEC type, input wavelength, and output wavelength supported by the wavelength regeneration module, and the like. The specific contents included in the wavelength regeneration module supporting information are not restricted in the present embodiment.

A path calculating module 410 is for calculating at least one wavelength path according to the wavelength regeneration module supporting information acquired by the acquiring module 400, and selecting a wavelength regeneration module for the wavelength division node that needs a wavelength regeneration process in the wavelength path.

The path calculating module 410 can calculate the wavelength path according to wavelength regeneration module supporting information of the wavelength division node by use of multiple existing methods. The specific modes of calculating the wavelength path by the path calculating module 410 is not restricted in the present embodiment. In the present embodiment, the path calculating module 410 needs to select a wavelength regeneration module for the wavelength division node that needs a wavelength regeneration process in the calculated wavelength path. In the present embodiment, the process of selecting a wavelength regeneration module can be categorized into the process of calculating a wavelength path so that the specific process of calculating a wavelength path by the path calculating module 410 differs from the existing specific process of calculating a wavelength path in that the path calculating module 410 needs to be take into account the factor of selecting a wavelength regeneration module in the wavelength path calculating algorithm.

When selecting a wavelength regeneration module, the path calculating module 410 should take into account multiple wavelength paths to be set up. That is, in addition to the wavelength path of interest, the path calculating module 410 needs to take other wavelength paths into account so as to make the number of the wavelength paths set up via the wavelength division node as large as possible. That is, the path calculating module 410 should assign wavelength regeneration modules in the wavelength division node reasonably so that the wavelength regeneration modules contained in the wavelength division node can be assigned to as many wavelength paths as possible.

As can be seen from the above descriptions, the path calculating module 410 should comply with a predetermined assigning principle in selecting a wavelength regeneration module for the wavelength division node in the wavelength path. The predetermined assigning principle may include making the number of the wavelength paths set up via the wavelength division node largest or as large as possible. The predetermined assigning principle may be also referred to as the principle of optimizing use of wavelength regeneration modules in a wavelength division node. In other words, in the present embodiment, the path calculating model 410 improves the existing wavelength path calculating algorithm so that it includes the principle of optimizing use of wavelength regeneration modules in a wavelength division node.

The wavelength regeneration module selected by the path calculating module 410 may include any one or two of wavelength regeneration modules in a direction from a start node to an end node of the wavelength path, and wavelength regeneration modules in a direction from an end node to a start node of the wavelength path. Usually, the wavelength regeneration modules selected by the path calculating module 410 include wavelength regeneration modules in both directions of the wavelength path. The specific example of the path calculating module 410 selecting wavelength regeneration modules for the wavelength division node that needs a wavelength regeneration process in the wavelength path is as described in the embodiment of the method, and is not repeated herein.

The distributing module 420 is for distributing the message containing the wavelength regeneration module selection information to the wavelength division node in the wavelength path, i.e., distributing the message containing information of the wavelength regeneration module selected by the path calculating module 410 to the wavelength division node in the wavelength path so that the wavelength division node sets up the wavelength connection according to the wavelength regeneration module indicated in the wavelength regeneration module selection information.

The distributing module 420 may distribute the wavelength regeneration module selection information to the wavelength division node via a wavelength connection setting up request message or alternatively via other messages. The distributing module 420 may carry the wavelength regeneration module selection information in an existing object or sub-object or alternatively in a newly added object or sub-object of the wavelength connection setting up request message. The wavelength regeneration module selection information may be in a serial number of the wavelength regeneration module or in another form. For example, four bits corresponds to four wavelength regeneration modules, one bit corresponds to one wavelength regeneration module, a wavelength regeneration module corresponding to a bit with the value 0 is not selected, and a wavelength regeneration module corresponding to a bit with the value 1 is selected. The specific process of distributing the wavelength regeneration module selection information by the distributing module 420 to the wavelength division node is not restricted in the present embodiment.

As can be seen from the descriptions of the above Embodiment 4, by selecting a wavelength regeneration module for the wavelength division node that needs the wavelength regeneration process in the calculated wavelength path by the path calculating module 410 in the embodiment, the requirements of multiple wavelength connections set up via passing through the same wavelength division node that needs a wavelength regeneration process are comprehensively taken into account, the use of wavelength regeneration modules in the wavelength division node is optimized, and the phenomenon that the wavelength division node fails to select a wavelength regeneration module for a following wavelength connection due to selection of a wavelength regeneration module for a preceding wavelength connection is avoided. Thus, the present embodiment avoids the phenomenon that the set up of the wavelength connection fails and improves the reliability of the set up of the wavelength connection.

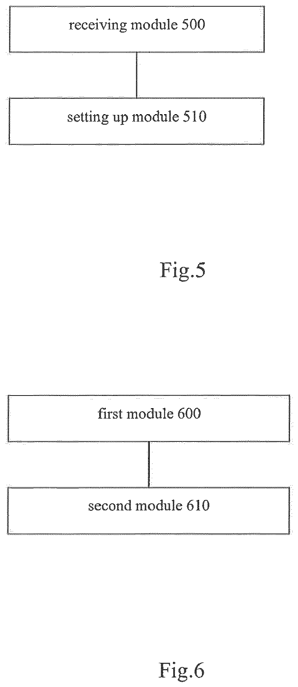

Embodiment 5: a device for setting up wavelength connection. The device may be provided in a wavelength division node. The structure of the device is shown in FIG. 5.

The device according to FIG. 5 comprises a receiving module 500 and a setting up module 510.

The receiving module 500 is for receiving a message containing wavelength regeneration module selection information.

The message received by the receiving module 500 may be a wavelength connection setting up request message, and the wavelength regeneration module selection information in the message may be the serial number or other information of the selected wavelength regeneration module, and the like.

The wavelength regeneration module selection information carried in the message received by the receiving module 500 is determined by another node in the optical network according to the optimized use algorithm of wavelength regeneration modules in a wavelength division node. The another node herein is a start node or a centralized wavelength path calculating node of the wavelength path and the like.

The message received by the receiving module 500 containing the wavelength regeneration module selection information is transmitted by an upstream node of the wavelength division node in the wavelength path, and can be transmitted from the start node till the end node in the wavelength path.

The setting up module 510 is for setting up the wavelength connection for the wavelength path, according to a wavelength regeneration module indicated in the wavelength regeneration module selection information contained in the message, when the device is a wavelength division node that needs a wavelength regeneration process.

Specifically, the setting up module 510 may determine the wavelength regeneration module for setting up the wavelength connection according to wavelength regeneration module selection information contained in the received message, and then the setting up module 510 sets up the wavelength connection with the determined wavelength regeneration module. In the present embodiment, the specific process of setting up the wavelength connection by the receiving module 510 is not restricted.

As can be seen from the descriptions of the above embodiment 5, the wavelength division node in the present embodiment does not need to determine independently the wavelength regeneration module for setting up the wavelength connection, and the process of determining the wavelength regeneration module is carried out by the start end or centralized wavelength path calculating node of the wavelength path. Thus, the start node or centralized wavelength path calculating node can take into account comprehensively the requirements of multiple wavelength connections set up via passing through the same wavelength division node that needs a wavelength regeneration process, optimizing the use of wavelength regeneration modules in the wavelength division node. Consequently, the setting up module 510 in the present embodiment can succeed in setting up the wavelength connection with respect to the wavelength connection setting up request message that is received later by the receiving module 500, avoids the phenomenon that the setting up module 510 fails in setting up wavelength connection, and improves the reliability of the set up of the wavelength connection.

Embodiment 6: a system for setting up wavelength connection. The structure of the system is shown in FIG. 6.

The system according to FIG. 6 comprises a plurality of nodes, e.g., a first node 600 and a second node 610. The first node may serve as a start node or a centralized wavelength path calculating node in the wavelength path, and the second node 610 may serve as a wavelength division node in the wavelength path.

The first node 600 is for acquiring wavelength regeneration module supporting information of a wavelength division node, calculating at least one wavelength path according to the wavelength regeneration module supporting information, selecting a wavelength regeneration module for the wavelength division node in the wavelength path, and distributing a message containing wavelength regeneration module selection information to the wavelength division node in the wavelength path;

When the first node 600 is a start node of the wavelength path, it distributes a wavelength connection setting up request message containing the wavelength regeneration module selection information to a downstream node in the wavelength path.

When the first node 600 is a centralized wavelength path calculating node, it may transmit the message containing the wavelength regeneration module selection information to the start node of the wavelength path, and transmits the wavelength connection setting up request message containing the wavelength regeneration module selection information via the start node to a downstream node in the wavelength path.

The second node 610 is for receiving the message containing the wavelength regeneration module selection information, and for setting up the wavelength connection for the wavelength path, according to the wavelength regeneration module indicated in the wavelength regeneration module selection information contained in the message, when the second node is the wavelength division node in the wavelength path.

The specific operations performed by the first node 600 and the second node 610, and their specific structure and the like are as described above and not repeated herein.

As can be seen from the descriptions of the above Embodiment 6, the first node 600 in the present embodiment selects the wavelength regeneration module for the wavelength division node (i.e., the second node 610) that needs a wavelength regeneration process in the calculated wavelength path so that the second node 610 does not need to determine independently the wavelength regeneration module for setting up the wavelength connection, and the first node 600 can take into account comprehensively the requirements of multiple wavelength connections set up via passing through the second node 610, and the use of wavelength regeneration modules in the second node 610 is optimized, the phenomenon that the second node 610 fails to select a wavelength regeneration module for a subsequent wavelength connection due to selecting a wavelength regeneration module for a preceding wavelength connection is avoided. Therefore, the present embodiment avoids the phenomenon that the setting up module 610 fails in setting up wavelength connection, and improves the reliability of the set up of the wavelength connection

Via the descriptions of the above embodiments, those skilled in the art can get to know clearly the invention can be realized by use of software plus necessary universal hardware platforms, or alternatively by use of hardware. But in most cases, the former is a more preferable mode of carrying out. Based on such understanding, all or part of the techncial solution of the present invention that makes contributions to the background art can be reflected in the form of a software product. The computer software product may be applied to executing the aforesaid method flow, and can be stored in a memory medium, such as a ROM/RAM, disc, optical disc, and the like, including several instructions for enabling a computer device (which may be a personal computer, server, or network device, and the like) to perform the method according to each or some portions of the embodiments.

Although the present invention is described via embodiments, it is known to an ordinary skilled in the art that there are many alterations and changes of the present invention that do not deviate from the present invention, the Claims in the application documents of the present invention includes these alterations and changes.

## Claims

1. A method for setting up wavelength connection, **characterized by** comprising:
acquiring (S100) wavelength regeneration module regeneration capability information of a wavelength division node that is a node where a wavelength cross connection is performed;
calculating at least one wavelength path according to the wavelength regeneration module regeneration capability information, and selecting (S110) a wavelength regeneration module for the wavelength division node that needs a wavelength regeneration process in the wavelength path, such that requirements of multiple wavelength connections that are set up via the same wavelength division node that needs a wavelength regeneration process are comprehensively taken into account; and
distributing (S120) a message containing the wavelength regeneration module selection information to the wavelength division node in the wavelength path so that the wavelength division node sets up the wavelength connection according to the wavelength regeneration module indicated in the wavelength regeneration module selection information.

2. The method according to claim 1, **characterized in that** the calculating at least one wavelength path according to the wavelength regeneration module regeneration capability information includes:
calculating by a start end of the wavelength path at least one wavelength path according to the wavelength regeneration module regeneration capability information; or
calculating by a centralized wavelength path calculating node at least one wavelength path according to the wavelength regeneration module regeneration capability information.

3. The method according to claim 1, **characterized in that** the selecting (S110) a wavelength regeneration module for the wavelength division node that needs a wavelength regeneration process in the wavelength path includes:
when at least two wavelength paths pass through the same wavelength division node that needs the wavelength regeneration process, listing combinations that are assigned to each wavelength path by the wavelength regeneration modules of the wavelength division node, and selecting, from the combinations, one that can satisfy a wavelength regeneration capability requirement of the each wavelength path.

4. The method according to claim 1, **characterized in that** the selected wavelength regeneration module includes:
a wavelength regeneration module in a direction from a start node to an end node of the wavelength path, and/or a wavelength regeneration module in a direction from the end node to the start node of the wavelength path.

5. The method according to claim 1, **characterized in that** the distributing a message containing the wavelength regeneration module selection information to the wavelength division node in the wavelength path includes:
carrying the wavelength regeneration module selection information in a wavelength connection setting up request message, and distributing the wavelength connection setting up request message to the wavelength division node.

6. The method according to any one of claims 1-5, **characterized in that** the selecting the wavelength regeneration module for the wavelength division node is complied with a predetermined assigning principle, wherein the predetermined assigning principle comprises making the number of the wavelength paths set up via the wavelength division node largest or as large as possible.

7. A device for setting up wavelength connection, **characterized by** comprising:
an acquiring module (400) for acquiring wavelength regeneration module regeneration capability information of a wavelength division node that is a node where a wavelength cross connection is performed;
a path calculating module (410) for calculating at least one wavelength path according to the wavelength regeneration module regeneration capability information, and selecting a wavelength regeneration module for the wavelength division node that needs a wavelength regeneration process in the wavelength path, such that requirements of multiple wavelength connections that are set up via the same wavelength multiplexing division node that needs a wavelength regeneration process are comprehensively taken into account; and
a distributing module (420) for distributing a message containing the wavelength regeneration module selection information to the wavelength division node in the wavelength path so that the wavelength division node sets up the wavelength connection according to the wavelength regeneration module indicated in the wavelength regeneration module selection information.

8. The device according to claim 7, **characterized in that** the device is provided in a start node or a centralized wavelength path calculating node of the wavelength path.

9. The device according to claim 7, **characterized in that** the wavelength regeneration module selected by the path calculating module includes:
a wavelength regeneration module in a direction from a start node to an end node of the wavelength path, and/or a wavelength regeneration module in a direction from the end node to the start node of the wavelength path.

10. The device according to any one of claims 7-9, **characterized in that** the path calculating module is configured to select the wavelength regeneration module such that the selecting the wavelength regeneration module for the wavelength division node is complied with a predetermined assigning principle, wherein the predetermined assigning principle comprises making the number of the wavelength paths set up via the wavelength division node largest or as large as possible.

11. A system for setting up wavelength connection, **characterized in** comprising:
a first node for acquiring a wavelength regeneration module regeneration capability information of a wavelength division node that is a node where a wavelength cross connection is performed, calculating at least one wavelength path according to the wavelength regeneration module regeneration capability information, selecting a wavelength regeneration module for the wavelength division node in the wavelength path, such that requirements of multiple wavelength connections that are set up via the same wavelength multiplexing division node that needs a wavelength regeneration process are comprehensively taken into account, and distributing a message containing the wavelength regeneration module selection information to the wavelength division node in the wavelength path; and
a second node for receiving the message containing the wavelength regeneration module selection information, and setting up the wavelength connection for the wavelength path according to the wavelength regeneration module indicated in the wavelength regeneration module selection information contained in the message, when the second node is the wavelength division node that needs a wavelength regeneration process in the wavelength path.

12. A system according to the claim 11, **characterized in that** the first node is configured to select the wavelength regeneration module such that the selecting the wavelength regeneration module for the wavelength division node is complied with a predetermined assigning principle, wherein the predetermined assigning principle comprises making the number of the wavelength paths set up via the wavelength division node largest or as large as possible.

## Patentansprüche

1. Verfahren zum Einrichten einer Wellenlängenverbindung, **dadurch gekennzeichnet, dass** es Folgendes umfasst:
Erfassen (S100) von Wellenlängenregenerationsmodul-Regenerationsfähigkeitsinformationen eines Wellenlängenmultiplexknotens, der ein Knoten ist, an dem eine Wellenlängenkreuzverbindung durchgeführt wird;
Berechnen mindestens eines Wellenlängenpfads gemäß den Wellenlängenregenerationsmodul-Regenerationsfähigkeitsinformationen und Auswählen (S110) eines Wellenlängenregenerationsmoduls für den Wellenlängenmultiplexknoten, der einen Wellenlängenregenerationsprozess benötigt, in dem Wellenlängenpfad, so dass Anforderungen mehrerer Wellenlängenverbindungen, die über denselben Wellenlängenmultiplexknoten eingerichtet werden, der einen Wellenlängenregenerationsprozess benötigt, vollumfänglich berücksichtigt werden, und
Verteilen (S120) einer Nachricht, die die Wellenlängenregenerationsmodul-Auswahlinformationen enthält, an den Wellenlängenmultiplexknoten in dem Wellenlängenpfad, so dass der Wellenlängenmultiplexknoten die Wellenlängenverbindung gemäß dem Wellenlängenregenerationsmodul einrichtet, das in den Wellenlängenregenerationsmodul-Auswahlinformationen angegeben ist.

2. Verfahren nach Anspruch 1, **dadurch gekennzeichnet, dass** das Berechnen mindestens eines Wellenlängenpfads gemäß den Wellenlängenregenerationsmodul-Regenerationsfähigkeitsinformationen Folgendes beinhaltet:
Berechnen mindestens eines Wellenlängenpfads gemäß den Wellenlängenregenerationsmodul-Regenerationsfähigkeitsinformationen durch ein Startende des Wellenlängenpfads; oder
Berechnen mindestens eines Wellenlängenpfads gemäß den Wellenlängenregenerationsmodul-Regenerationsfähigkeitsinformationen durch einen zentralisierten Wellenlängenpfad-Berechnungsknoten.

3. Verfahren nach Anspruch 1, **dadurch gekennzeichnet, dass** das Auswählen (S110) eines Wellenlängenregenerationsmoduls für den Wellenlängenmultiplexknoten, der einen Wellenlängenregenerationsprozess benötigt, in dem Wellenlängenpfad Folgendes umfasst:
wenn mindestens zwei Wellenlängenpfade durch denselben Wellenlängenmultiplexknoten verlaufen, der den Wellenlängenregenerationsprozess benötigt, Auflisten von Kombinationen, die jedem Wellenlängenpfad durch die Wellenlängenregenerationsmodule des Wellenlängenmultiplexknotens zugewiesen sind, und Auswählen einer Kombination aus den Kombinationen, die eine Anforderung an die Wellenlängenregenerationsfähigkeit jedes Wellenlängenpfads erfüllen kann.

4. Verfahren nach Anspruch 1, **dadurch gekennzeichnet, dass** das ausgewählte Wellenlängenregenerationsmodul Folgendes beinhaltet:
ein Wellenlängenregenerationsmodul in einer Richtung von einem Startknoten zu einem Endknoten des Wellenlängenpfads und/oder ein Wellenlängenregenerationsmodul in einer Richtung von dem Endknoten zu dem Startknoten des Wellenlängenpfads.

5. Verfahren nach Anspruch 1, **dadurch gekennzeichnet, dass** das Verteilen einer Nachricht, die die Wellenlängenregenerationsmodul-Auswahlinformationen enthält, an den Wellenlängenmultiplexknoten in dem Wellenlängenpfad Folgendes umfasst:
Tragen der Wellenlängenregenerationsmodul-Auswahlinformationen in einer Wellenlängenverbindungseinrichtungs-Anfragenachricht und Verteilen der Wellenlängenverbindungseinrichtungs-Anfragenachricht an den Wellenlängenmultiplexknoten.

6. Verfahren nach einem der Ansprüche 1 bis 5, **dadurch gekennzeichnet, dass** das Auswählen des Wellenlängenregenerationsmoduls für den Wellenlängenmultiplexknoten in Übereinstimmung mit einem vorab festgelegten Zuweisungsgrundsatz erfolgt, wobei der vorab festgelegte Zuweisungsgrundsatz umfasst, dass die Anzahl der Wellenlängenpfade, die über den Wellenlängenmultiplexknoten eingerichtet werden, am größten oder so groß wie möglich gemacht wird.

7. Vorrichtung zum Einrichten einer Wellenlängenverbindung, **dadurch gekennzeichnet, dass** sie Folgendes umfasst:
ein Erfassungsmodul (400) zum Erfassen von Wellenlängenregenerationsmodul-Regenerationsfähigkeitsinformationen eines Wellenlängenmultiplexknotens, der ein Knoten ist, an dem eine Wellenlängenkrenzverbindung durchgeführt wird;
ein Pfadberechnungsmodul (410) zum Berechnen mindestens eines Wellenlängenpfads gemäß den Wellenlängenregenerationsmodul-Regenerationsfähigkeitsinformationen und Auswählen eines Wellenlängenregenerationsmoduls für den Wellenlängenmultiplexknoten, der einen Wellenlängenregenerationsprozess benötigt, in dem Wellenlängenpfad, so dass Anforderungen mehrerer Wellenlängenverbindungen, die über denselben Wellenlängenmultiplexknoten eingerichtet werden, der einen Wellenlängenregenerationsprozess benötigt, vollumfänglich berücksichtigt werden, und
ein Verteilungsmodul (420) zum Verteilen einer Nachricht, die die Wellenlängenregenerationsmodul-Auswahlinformationen enthält, an den Wellenlängenmultiplexknoten in dem Wellenlängenpfad, so dass der Wellenlängenmultiplexknoten die Wellenlängenverbindung gemäß dem Wellenlängenregenerationsmodul einrichtet, das in den Wellenlängenregenerationsmodul-Auswahlinformationen angegeben ist.

8. Vorrichtung nach Anspruch 7, **dadurch gekennzeichnet, dass** die Vorrichtung in einem Startknoten oder einem zentralisierten Wellenlängenpfad-Berechnungsknoten des Wellenlängenpfads bereitgestellt ist.

9. Vorrichtung nach Anspruch 7, **dadurch gekennzeichnet, dass** das Wellenlängenregenerationsmodul, das von dem Pfadberechnungsmodul ausgewählt wird, Folgendes beinhaltet:
ein Wellenlängenregenerationsmodul in einer Richtung von einem Startknoten zu einem Endknoten des Wellenlängenpfads und/oder ein Wellenlängenregenerationsmodul in einer Richtung von dem Endknoten zu dem Startknoten des Wellenlängenpfads.

10. Vorrichtung nach einem der Ansprüche 7 bis 9, **dadurch gekennzeichnet, dass** das Pfadberechnungsmodul dafür ausgelegt ist, das Wellenlängenregenerationsmodul derart auszuwählen, dass das Auswählen des Wellenlängenregenerationsmoduls für den Wellenlängenmultiplexknoten in Übereinstimmung mit einem vorab festgelegten Zuweisungsgrundsatz erfolgt, wobei der vorab festgelegte Zuweisungsgrundsatz umfasst, dass die Anzahl der Wellenlängenpfade, die über den Wellenlängenmultiplexknoten eingerichtet werden, am größten oder so groß wie möglich gemacht wird.

11. System zum Einrichten einer Wellenlängenverbindung, **dadurch gekennzeichnet, dass** es Folgendes umfasst:
einen ersten Knoten zum Erfassen einer Wellenlängenregenerationsmodul-Regenerationsfähigkeitsinformation eines Wellenlängenmultiplexknotens, der ein Knoten ist, an dem eine Wellenlängenkreuzverbindung durchgeführt wird, Berechnen mindestens eines Wellenlängenpfads gemäß der Wellenlängenregenerationsmodul-Regenerationsfähigkeitsinformation, Auswählen eines Wellenlängenregenerationsmoduls für den Wellenlängenmultiplexknoten in dem Wellenlängenpfad, so dass Anforderungen mehrerer Wellenlängenverbindungen, die über denselben Wellenlängenmultiplexknoten eingerichtet werden, der einen Wellenlängenregenerationsprozess benötigt, vollumfänglich berücksichtigt werden, und Verteilen einer Nachricht, die die Wellenlängenregenerationsmodul-Auswahlinformationen enthält, an den Wellenlängenmultiplexknoten in dem Wellenlängenpfad; und
einen zweiten Knoten zum Empfangen der Nachricht, die die Wellenlängenregenerationsmodul-Auswahlinformationen enthält, und Einrichten der Wellenlängenverbindung gemäß dem Wellenlängenregenerationsmodul, das in den Wellenlängenregenerationsmodul-Auswahlinformationen, die in der Nachricht enthalten sind, angegeben ist, wenn der zweite Knoten der Wellenlängenmultiplexknoten ist, der einen Wellenlängenregenerationsprozess in dem Wellenlängenpfad benötigt.

12. System nach Anspruch 11, **dadurch gekennzeichnet, dass** der erste Knoten dafür ausgelegt ist, das Wellenlängenregenerationsmodul derart auszuwählen, dass das Auswählen des Wellenlängenregenerationsmoduls für den Wellenlängenmultiplexknoten in Übereinstimmung mit einem vorab festgelegten Zuweisungsgrundsatz erfolgt, wobei der vorab festgelegte Zuweisungsgrundsatz umfasst, dass die Anzahl der Wellenlängenpfade, die über den Wellenlängenmultiplexknoten eingerichtet werden, am größten oder so groß wie möglich gemacht wird.

## Revendications

1. Procédé pour établir une connexion de longueur d'onde, **caractérisé en ce qu'**il comprend :
l'acquisition (S100) d'informations de capacité de régénération de module de régénération de longueur d'onde d'un noeud de division de longueur d'onde qui est un noeud où une connexion transversale de longueur d'onde est réalisée ;
le calcul d'au moins un trajet de longueur d'onde en fonction des informations de capacité de régénération de module de régénération de longueur d'onde, et la sélection (S110) d'un module de régénération de longueur d'onde pour le noeud de division de longueur d'onde qui nécessite un processus de régénération de longueur d'onde dans le trajet de longueur d'onde, de sorte que les exigences de multiples connexions de longueur d'onde qui sont établies via le même noeud de division de longueur d'onde qui nécessite un processus de régénération de longueur d'onde soient entièrement prises en considération ; et
la distribution (S120) d'un message contenant les informations de sélection de module de régénération de longueur d'onde au noeud de division de longueur d'onde dans le trajet de longueur d'onde de sorte que le noeud de division de longueur d'onde établisse la connexion de longueur d'onde en fonction du module de régénération de longueur d'onde indiqué dans les informations de sélection de module de régénération de longueur d'onde.

2. Procédé selon la revendication 1, **caractérisé en ce que** le calcul d'au moins un trajet de longueur d'onde en fonction des informations de capacité de régénération de module de régénération de longueur d'onde comprend :
le calcul par une extrémité de début du trajet de longueur d'onde d'au moins un trajet de longueur d'onde en fonction des informations de capacité de régénération de module de régénération de longueur d'onde ; ou
le calcul par un noeud de calcul de trajet de longueur d'onde centralisé d'au moins un trajet de longueur d'onde en fonction des informations de capacité de régénération de module de régénération de longueur d'onde.

3. Procédé selon la revendication 1, **caractérisé en ce que** la sélection (S110) d'un module de régénération de longueur d'onde pour le noeud de division de longueur d'onde qui nécessite un processus de régénération de longueur d'onde dans le trajet de longueur d'onde comprend :
lorsqu'au moins deux trajets de longueur d'onde traversent le même noeud de division de longueur d'onde qui nécessite le processus de régénération de longueur d'onde, l'énumération des combinaisons qui sont assignées à chaque trajet de longueur d'onde par les modules de régénération de longueur d'onde du noeud de division de longueur d'onde, et
la sélection, parmi les combinaisons, de celle qui peut satisfaire un besoin de capacité de régénération de longueur d'onde pour chaque trajet de longueur d'onde.

4. Procédé selon la revendication 1, **caractérisé en ce que** le module de régénération de longueur d'onde sélectionné comprend :
un module de régénération de longueur d'onde dans une direction allant d'un noeud de début à un noeud de fin du trajet de longueur d'onde, et/ou un module de régénération de longueur d'onde dans une direction allant du noeud de fin au noeud de début du trajet de longueur d'onde.

5. Procédé selon la revendication 1, **caractérisé en ce que** la distribution d'un message contenant les informations de sélection de module de régénération de longueur d'onde au noeud de division de longueur d'onde dans le trajet de longueur d'onde comprend :
le transport des informations de sélection de module de régénération de longueur d'onde dans une connexion de longueur d'onde établissant un message de demande, et la distribution du message de demande de configuration de connexion de longueur d'onde à un noeud de division de longueur d'onde.

6. Procédé selon l'une quelconque des revendications 1 à 5, **caractérisé en ce que** la sélection du module de régénération de longueur d'onde pour le noeud de division de longueur d'onde est conforme à un principe d'assignation prédéterminé, le principe d'assignation prédéterminé consistant à rendre le nombre des trajets de longueur d'onde établis via le noeud de division de longueur d'onde le plus grand ou aussi grand que possible.

7. Dispositif pour établir une connexion de longueur d'onde, **caractérisé en ce qu'**il comprend :
un module d'acquisition (400) pour acquérir des informations de capacité de régénération de module de régénération de longueur d'onde d'un noeud de division de longueur d'onde qui est un noeud où une connexion transversale de longueur d'onde est réalisée ;
un module de calcul de trajet (410) pour calculer au moins un trajet de longueur d'onde en fonction des informations de capacité de régénération de module de régénération de longueur d'onde, et sélectionner un module de régénération de longueur d'onde pour le noeud de division de longueur d'onde qui nécessite un processus de régénération de longueur d'onde dans le trajet de longueur d'onde, de sorte que les exigences de multiples connexions de longueur d'onde qui sont établies via le même noeud de division à multiplexage en longueur d'onde qui nécessite un processus de régénération de longueur d'onde soient entièrement prises en considération ; et
un module de distribution (420) pour distribuer un message contenant les informations de sélection de module de régénération de longueur d'onde au noeud de division de longueur d'onde dans le trajet de longueur d'onde de sorte que le noeud de division de longueur d'onde établisse la connexion de longueur d'onde en fonction du module de régénération de longueur d'onde indiqué dans les informations de sélection de module de régénération de longueur d'onde.

8. Dispositif selon la revendication 7, **caractérisé en ce que** le dispositif est prévu dans un noeud de début ou un noeud de calcul de trajet de longueur d'onde centralisé du trajet de longueur d'onde.

9. Dispositif selon la revendication 7, **caractérisé en ce que** le module de régénération de longueur d'onde sélectionné par le module de calcul de trajet comprend :
un module de régénération de longueur d'onde dans une direction allant d'un noeud de début à un noeud de fin du trajet de longueur d'onde, et/ou un module de régénération de longueur d'onde dans une direction allant du noeud de fin au noeud de début du trajet de longueur d'onde.

10. Dispositif selon l'une quelconque des revendications 7 à 9, **caractérisé en ce que** le module de calcul de trajet est configuré pour sélectionner le module de régénération de longueur d'onde de telle sorte que la sélection du module de régénération de longueur d'onde pour le noeud de division de longueur d'onde soit conforme à un principe d'assignation prédéterminé, le principe d'assignation prédéterminé consistant à rendre le nombre des trajets de longueur d'onde établis via le noeud de division de longueur d'onde le plus grand ou aussi grand que possible.

11. Système pour établir une connexion de longueur d'onde, **caractérisé en ce qu'**il comprend :
un premier noeud pour acquérir des informations de capacité de régénération de module de régénération de longueur d'onde d'un noeud de division de longueur d'onde qui est un noeud où une connexion transversale de longueur d'onde est réalisée, calculer au moins un trajet de longueur d'onde en fonction des informations de capacité de régénération de module de régénération de longueur d'onde, sélectionner un module de régénération de longueur d'onde pour le noeud de division de longueur d'onde dans le trajet de longueur d'onde, de sorte que les exigences de multiples connexions de longueur d'onde qui sont établies via le même noeud de division à multiplexage en longueur d'onde qui nécessite un processus de régénération en longueur d'onde soient complètement prises en considération, et distribuer un message contenant les informations de sélection de module de régénération de longueur d'onde au noeud de division de longueur d'onde dans le trajet de longueur d'onde ; et
un second noeud pour recevoir le message contenant les informations de sélection de module de régénération de longueur d'onde, et établir la connexion de longueur d'onde pour le trajet de longueur d'onde en fonction du module de régénération de longueur d'onde indiqué dans les informations de sélection de module de régénération de longueur d'onde contenue dans le message, lorsque le second noeud est le noeud de division de longueur d'onde qui nécessite un processus de régénération de longueur d'onde dans le trajet de longueur d'onde.

12. Système selon la revendication 11, **caractérisé en ce que** le premier noeud est configuré pour sélectionner le module de régénération de longueur d'onde de telle sorte que la sélection du module de régénération de longueur d'onde pour le noeud de division de longueur d'onde soit conforme à un principe d'assignation prédéterminé, le principe d'assignation prédéterminé consistant à rendre le nombre des trajets de longueur d'onde établis via le noeud de division de longueur d'onde le plus grand ou aussi grand que possible.
